# EUROPEAN PATENT APPLICATION

(11) **EP 4 560 717 A1**
(43) Date of publication of application: **28.05.2025**
(21) Application number: 24212868.4
(22) Date of filing: 14.11.2024
(51) Int. Cl.: H01M 4/04, H01M 4/13, H01M 4/62, H01M 10/0525, H01M 10/0587, H01M 4/02

(54) **ELECTRODE FOR RECHARGEABLE BATTERY AND ELECTRODE ASSEMBLY INCLUDING THE ELECTRODE**

(30) Priority: 24.11.2023 KR 20230166079
(71) Applicant: SAMSUNG SDI CO., LTD., Yongin-si, Gyeonggi-do 17084 (KR)
(72) Inventor: An, Hoyong, Yongin-si, Gyeonggi-do 17084 (KR); Kim, Beom Kwon, Yongin-si, Gyeonggi-do 17084 (KR); Jo, Gurnyoung, Yongin-si, Gyeonggi-do 17084 (KR); Jung, Hyeseung, Yongin-si, Gyeonggi-do 17084 (KR); Kim, Soochan, Yongin-si, Gyeonggi-do 17084 (KR); Kim, Minjun, Yongin-si, Gyeonggi-do 17084 (KR); Hong, Minyoung, Yongin-si, Gyeonggi-do 17084 (KR); Han, Seung-Hun, Yongin-si, Gyeonggi-do 17084 (KR)
(74) Representative: Michalski Hüttermann & Partner Patentanwälte mbB

(57) **Abstract**

An example embodiment of the present disclosure includes an electrode for a rechargeable battery, the electrode including a substrate, an electrode tab on a surface of the substrate, and a first active material layer and a second active material layer on the surface of the substrate, the first active material layer and the second active material layer being on opposite sides of the electrode tab, wherein thicknesses of the first active material layer and the second active material layer are different from each other.

## Description

### BACKGROUND OF THE INVENTION

### (a) Field of the Invention

Example embodiments relate to an electrode for a rechargeable battery, and to an electrode assembly including the electrode.

### (b) Description of the Related Art

A rechargeable battery is a battery that is typically repeatedly charged and discharged, unlike a primary battery. A small-capacity rechargeable battery may be used in a portable small electronic device such as, e.g., a mobile phone, a laptop computer, a camcorder, and the like. A large-capacity and high-density rechargeable battery may be used for a power source or energy storage for, e.g., driving a motor of a hybrid vehicle or an electric vehicle.

The rechargeable battery is typically manufactured by sealing an electrode assembly together with an electrolyte in a case. The electrode assembly has a structure in which a positive electrode, a separator, and a negative electrode are stacked.

The positive electrode and the negative electrode may be manufactured into a jelly roll-shaped or cylindrical electrode assembly by continuously applying an active material on a long band-shaped substrate to form an active material layer, and then winding the active material layer, or may be manufactured into a stacked electrode assembly by stacking sheet-shaped electrodes cut to a predetermined or desired length.

The cylindrical electrode assembly is typically formed by repeatedly winding the electrode, and the ratio of the positive electrode active material and the negative electrode active material of the electrode disposed at the core and at the end of the winding of the cylindrical electrode assembly becomes nonuniform due to the curvature difference caused by the number of winding, resulting in a decrease in the lifespan of the electrode assembly.

### SUMMARY OF THE INVENTION

Example embodiments include an electrode that may manufacture a rechargeable battery with a uniform N/P ratio by reducing or minimizing the difference in the N/P ratio between the core and the end of a wound-type electrode assembly, and an electrode assembly including the electrode.

The advantages provided by the disclosed example embodiments are not limited to the above, and other objects not mentioned herein will be understood from the following description by those skilled in the art.

An example embodiment of the present disclosure includes an electrode for a rechargeable battery, the electrode including a substrate, an electrode tab formed on one surface of the substrate, and a first active material layer and a second active material layer that are formed on one surface of the substrate and are respectively disposed on both sides of the electrode tab, wherein thicknesses of the first active material layer and the second active material layer are different from each other.

The electrode for the rechargeable battery may further include a third active material layer formed on the other surface of the substrate and corresponding to the first active material layer, and a fourth active material layer formed on the other surface of the substrate and corresponding to the second active material layer, wherein thicknesses of the third active material layer and the fourth active material layer are different from each other.

The thickness of the first active material layer may be thicker than the thickness of the second active material layer, and the thickness of the fourth active material layer may be thicker than the thickness of the third active material layer.

Each, or at least one, of the first active material layer and the fourth active material layer may include a lower layer and an upper layer stacked on the lower layer.

A thickness of the upper layer may be greater than a thickness of the lower layer.

The thickness of the lower layer may be in a range of about 1 µm to 10 µm.

The lower layer may include a conductive material.

The conductive material may include at least one of carbon and carbon nanotube (CNT).

The thickness of the lower layer of the first active material layer may be thinner than the thickness of the lower layer of the fourth active material layer.

A ratio of lengths of the first active material layer and the third active material layer to lengths of the second active material layer and the fourth active material layer may be about 1:9 to 5:5.

The length of the second active material layer may be shorter than the length of the fourth active material layer.

Another example embodiment of the present disclosure includes an electrode assembly including a first electrode, a separator, a second electrode overlapping the first electrode, and a separator disposed between the first electrode and the second electrode, wherein the first electrode, the second electrode, and the separator are wound to have a jelly roll shape, and the first active material layer and the third active material layer are disposed in a core of the winding.

The first active material layer may be located outside of the jelly roll relatively to the third active material layer.

According to the example embodiment of the present disclosure, it is possible to reduce or minimize the decrease in cell lifespan due to non-uniformity in the N/P ratio between the core and end of the coil.

### BRIEF DESCRIPTION OF THE DRAWINGS

The accompanying drawings illustrate example embodiments of the present disclosure and together with the foregoing disclosure, serve to provide further understanding of the technical features of the example embodiments, and thus, the example embodiments are not construed as being limited to the drawings.
FIG. 1 illustrates a schematic perspective view of a rechargeable battery, according to an example embodiment of the present disclosure.
FIG. 2 illustrates a longitudinal cross-sectional view of the rechargeable battery shown in FIG. 1.
FIG. 3 illustrates a cross-sectional view of a second electrode, according to an example embodiment of the present disclosure.
FIG. 4 illustrates a graph measuring resistance according to a position of an electrode tab, according to an example embodiment of the present disclosure.
FIG. 5 illustrates a graph of an N/P ratio to the number of turns of an electrode assembly according to a conventional art.
FIG. 6 illustrates a graph of an N/P ratio to the number of turns of an electrode assembly, according to an example embodiment of the present disclosure.
FIG. 7 illustrates an enlarged view of a cap assembly of the rechargeable battery shown in FIG. 2.

### DETAILED DESCRIPTION

Hereinafter, example embodiments will be described in detail with reference to the accompanying drawings. Prior to description, it should be understood that terms and words used in the specification and the appended claims should not be construed as having common and dictionary meanings, but should be interpreted as having meanings and concepts corresponding to technical ideas of the present disclosure in view of the principle that define the concepts of the invention. Accordingly, since the example embodiment described in the specification and the configurations shown in the drawings are merely examples, they do not represent all of the technical ideas of the present invention, and it should be understood that that various equivalents and modified examples, which may replace the example embodiments, are possible when filing the present application.

It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

Although the terms "first," "second", and the like are used to describe various elements, these elements are not limited by these terms. These terms are used to distinguish one element from another, and unless stated to the contrary, a first element may be a second element.

Throughout the specification, unless stated otherwise, each element may be singular or plural.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, when the device in the figures is turned over, elements described as "below" or "beneath" or "under" other elements or features would then be oriented "above" the other elements or features. Thus, the example terms "below" and "under" can encompass both an orientation of above and below.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing particular embodiments and is not intended to be limiting of the present disclosure.

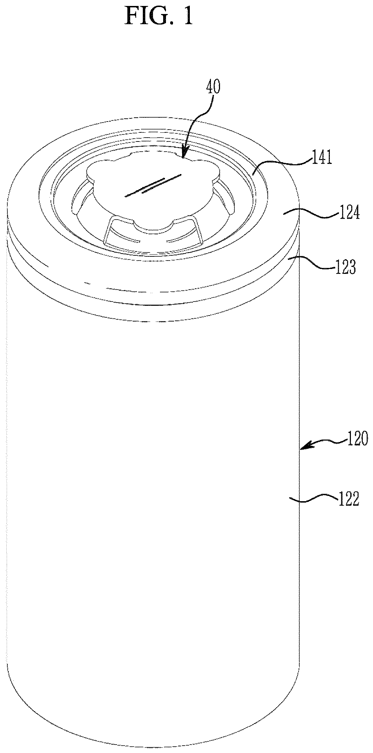

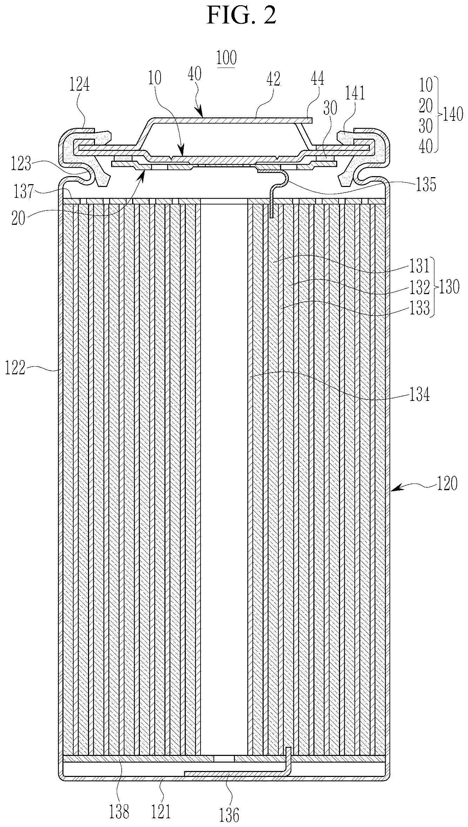

FIG. 1 illustrates a schematic perspective view of a rechargeable battery, according to an example embodiment of the present disclosure, and FIG. 2 illustrates a longitudinal cross-sectional view of the rechargeable battery shown in FIG. 1. FIGS. 1 and 2 are described herein together, and not all elements present in one figure are present in the other.

As shown in FIG. 1 and FIG. 2, a rechargeable battery 100 according to an example embodiment of the present disclosure includes a case 120, an electrode assembly 130 accommodated in the case 120, and a cap assembly 140 assembled to an opening of the case 120 to seal the case 120. The cap assembly 140 includes a safety vent 10 that reduces or prevents explosion of the rechargeable battery 100, and a cap-up 40 that covers the safety vent 10.

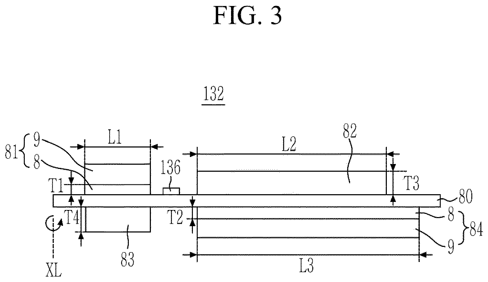

The electrode assembly 130 includes a first electrode 131, a separator 133, and a second electrode 132 that are stacked, e.g., sequentially stacked. The electrode assembly 10 may be or include a cylindrical jelly roll in which the first electrode 131, the separator 133, and the second electrode 132 are stacked and then wound around a winding axis XL (see FIG. 3).

The first electrode 131 may include a first substrate and a first active material layer formed on the first substrate, and the first electrode 131 may be a positive electrode 131.

The first substrate is formed of a thin conductive metal plate and used as a current collector, and may be or include, for example, aluminum.

A positive electrode 131 for a lithium rechargeable battery may include a current collector and a positive electrode active material layer formed on the current collector. The positive electrode active material layer includes a positive electrode active material, and may further include a binder and/or a conductive material.

For example, the positive electrode 131 may further include an additive to be configured as a sacrificial positive electrode.

The content of the positive electrode active material may be in a range of about 90 wt% to 99.5 wt% based on 100 wt% of the positive electrode active material layer, and the content of the binder and the conductive material may be in a range of about 0.5 wt% to 5 wt% based on 100 wt% of the positive electrode active material layer, respectively.

As the positive electrode active material, a compound capable of reversible intercalation and deintercalation of lithium (lithiated intercalation compound) may be used. Specifically, the active material may be or include at least one composite oxide formed of, or including, a metal such as, e.g., cobalt, manganese, nickel, and a combination thereof in addition to the lithium.

The composite oxide may be or include a lithium transition metal composite oxide, for example, a lithium nickel-based oxide, a lithium cobalt-based oxide, a lithium manganese-based oxide, a lithium iron phosphate-based compound, a cobalt-free nickel-manganese-based oxide, or a combination thereof.

For example, a compound represented by one of the following formulas may be included in the composite oxide. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001 ≤b≤0.1); LiₐMn_{1-b}G_{b}O₂(0.90≤a≤1.8, 0.001 ≤b≤0.1); LiₐMn₂G_{b}O₄(0.90≤a≤1.8, 0.001 ≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas, A is or includes Ni, Co, Mn, or a combination thereof; X is or includes Al, Ni, Co, Mn, Cr, Fe, Mg, Sr, V, a rare earth element or a combination thereof; D is or includes O, F, S, P, or a combination thereof; G is or includes Al, Cr, Mn, Fe, Mg, La, Ce, Sr, V, or a combination thereof; L¹ is or includes Mn, Al, or a combination thereof.

For example, the positive electrode active material may be or include a high-nickel-based positive electrode active material in which a nickel content is about 80 mol% or more, about 85 mol% or more, about 90 mol% or more, about 91 mol% or more, or about 94 mol% or more and about 99 mol% or less with respect to 100 mol% of metal excluding lithium in the lithium transition metal composite oxide. The high-nickel-based positive electrode active material may realize high capacity, and thus may be applied to high-capacity and high-density lithium rechargeable batteries.

The binder is configured to sufficiently adhere the positive electrode active material particles to each other and also to sufficiently adhere the positive electrode active material to the current collector. Representative examples of the binder include, e.g., polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material is configured to provide conductivity to the electrode, and may be or include any material as long as the electronic conductive material does not trigger a chemical change in the battery configured. Examples of the conductive material may include, for example, a carbon-based material such as, e.g., natural graphite, artificial graphite, carbon black, acetylene black, Ketjen black, a carbon fiber, a carbon nanofiber, and a carbon nanotube; and may be or include a metal-based material in the form of metal powder or metal fiber including copper, nickel, aluminum, silver, and the like; a conductive polymer such as a polyphenylene derivative; or a mixture thereof.

The first substrate may include an electrode active portion in which the first active material layer is formed, and an electrode uncoated portion in which the first substrate is exposed because the first active material layer is not formed, and a positive electrode tab 135 may be connected to the electrode uncoated portion.

The positive electrode tab 135 may be made of or include materials that are similar to or the same as the substrate, for example, aluminum.

FIG. 3 illustrates a cross-sectional view of a second electrode, according to an example embodiment of the present disclosure.

Referring to FIG. 3, the second electrode 132 may be a negative electrode 132, and includes a substrate 80 and negative electrode active material layers 81, 82, 83, and 84 formed on the substrate 80.

As the substrate 80, one of a copper foil, a nickel foil, a stainless steel foil, a titanium foil, a nickel foam, a copper foam, a polymer substrate coated with a conductive metal, and a combination thereof may be used.

The negative electrode active material layers 81, 82, 83, and 84 include a first active material layer 81 and a second active material layer 82 formed on one surface of the substrate 80 and having different thicknesses, and a third active material layer 83 and a fourth active material layer 84 formed on the other surface of the substrate 80 and having different thicknesses.

An electrode tab 136 for drawing a current to the outside is attached to the substrate 80, and the first active material layer 81 and the second active material layer 82 are disposed on opposite sides of each other with the electrode tab 136 interposed therebetween. In addition, the third active material layer 83 and the fourth active material layer 84 are also disposed on opposite sides of each other with the electrode tab 136 interposed therebetween.

The first active material layer 81 may be formed thicker than the second active material layer 82, and the third active material layer 83 may be formed thinner than the fourth active material layer 84.

Meanwhile, the first active material layer 81 and the third active material layer 83 may be disposed to correspond to each other with the substrate 80 interposed therebetween, and the second active material layer 82 and the fourth active material layer 84 may be disposed to correspond to each other with the substrate 80 interposed therebetween. Corresponding to each other here includes the fact that layers 82 and 84 are on opposite sides of the substrate 80.

The length L1 of the first active material layer 81 and the third active material layer 83 may be shorter than the length L2 of the second active material layer 82 and the length L3 of the fourth active material layer 84, and the first active material layer 81 and the third active material layer 83 may be located in the core of the electrode assembly, which will be described later. In this case, the length is the winding direction of the electrode assembly.

When wound around the winding axis XL, the first active material layer 81 may be disposed outside the third active material layer 83.

The ratio of the lengths L2 and L3 of the second active material layer 82 and the fourth active material layer 84 to the lengths L1 of the first active material layer 81 and the third active material layer 83 may vary depending on the position of the electrode tab 136.

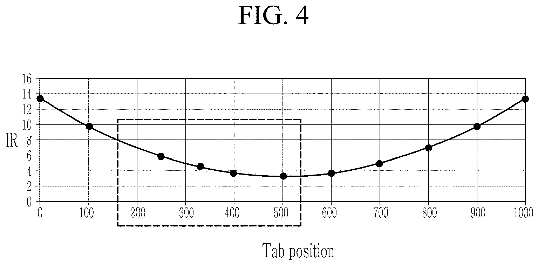

FIG. 4 illustrates a graph measuring an electrical resistance according to a position of an electrode tab according to an example embodiment of the present disclosure.

Referring to FIG. 4, when the total length of the electrode is 1000 mm, it can be seen that the electrical resistance decreases as the position of the tab 136 illustrated in FIG. 3 moves toward the middle portion thereof.

Thus, the ratio of the length of the first active material layer 81 and the third active material layer 83:the length of the second active material layer and the fourth active material layer may be in a range of about 1:9 to 5:5, and the length L3 of the fourth active material layer 84 may be formed to be longer than the length L2 of the second active material layer 82.

The first active material layer 81 and the fourth active material layer 84 may have a similar or same structure and may be made of a similar or same material, and the second active material layer 82 and the third active material layer 83 may be made of a similar or same material.

With reference to FIG. 3, each, or at least one, of the first active material layer 81 and the fourth active material layer 84 may include a lower layer 8 and an upper layer 9 stacked on the lower layer 8. The lower layer 8 may have a thickness of about 1 µm to 10 µm. The thickness T1 of the lower layer 8 of the first active material layer 81 may be lower than the thickness T2 of the lower layer 8 of the fourth active material layer 84.

The second active material layer 82 and the third active material layer 83 may be formed as a single layer, and the thickness T3 of the second active material layer 82 may be lower than the thickness T4 of the third active material layer 83. The second active material layer 82 and the third active material layer 83 may be made of or include a similar or same material as the upper layer 9 of the first active material layer 81 and of the fourth active material layer 84.

The upper layer 9 of the first active material layer 81 and the fourth active material layer 84, the second active material layer 82, and the third active material layer 83 include a negative electrode active material, and the negative electrode active material may further include a binder and/or a conductive material. For example, the upper layer 9 of the first active material layer 81 and the fourth active material layer 84, the second active material layer 82, and the third active material layer 83, may include about 90 wt% to 99 wt% of the negative electrode active material, about 0.5 wt% to 5 wt% of the binder, and about 0 wt% to 5 wt% of the conductive material.

The negative electrode active material may include a material capable of reversibly intercalation/deintercalating lithium ions, lithium metal, an alloy of lithium metal, a material capable of being doped and undoped on lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include soft carbon or hard carbon, mesophase pitch carbide, fired coke, and the like.

For the alloy of the lithium metal, an alloy of lithium and metal that is one of Na, K, Rb, Cs, Fr, Be, Mg, Ca, Sr, Si, Sb, Pb, In, Zn, Ba, Ra, Ge, Al and Sn may be used

As a material that may be doped and dedoped in the lithium, Si-based negative electrode active material or Sn-based negative electrode active material may be used. The Si-based negative electrode active material may be or include silicon, a silicon-carbon composite, SiOx (0<x<2), a Si-Q alloy (wherein Q is one of an alkali metal, an alkaline earth metal, a group 13 element, a group 14 element (excluding Si), a group 15 element, a group 16 elements, a transition metal, a rare earth element and a combination thereof), or a combination thereof. The Sn-based negative electrode active material may be or include Sn, SnO₂, a Sn-based alloy, or a combination thereof.

The silicon-carbon composite may be or include a composite of silicon and amorphous carbon. According to the example embodiment, the silicon-carbon composite may be or include silicon particles and may have a form in which amorphous carbon is coated on the surface of the silicon particles. For example, the silicon-carbon composite may include a secondary particle (core) in which silicon primary particles are assembled and an amorphous carbon coating layer (shell) disposed on the surface of the secondary particle. The amorphous carbon may also be disposed between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer disposed on the surface of the core.

The Si-based negative electrode active material or Sn-based negative electrode active material may be mixed with a carbon-based negative electrode active material.

The binder may be configured to sufficiently adhere the negative electrode active material particles to each other and also to sufficiently adhere the negative electrode active material to the current collector. As the binder, a non-aqueous binder, an aqueous binder, a dry binder, or a combination thereof may be used.

The non-aqueous binder may be or include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include one of a styrene-butadiene rubber, a (meth)acrylate styrene-butadiene rubber, a (meth)acrylonitrile-butadiene rubber, a (meth)acrylonitrile-butadiene rubber, a (meth)acrylic rubber, a butyl rubber, a fluorine rubber, a polyethylene oxide, polyvinylpyrrolidone, polyepichlorohydrin, a polyphosphazene, a poly(meth)acrylonitrile, an ethylene propylene diene copolymer, a polyvinylpyridine, a chlorosulfonated polyethylene, latex, a polyester resin, a (meth)acrylic resin, a phenol resin, an epoxy resin, a polyvinyl alcohol, and a combination thereof.

When the aqueous binder is used as the negative electrode binder, a cellulose-based compound that may impart viscosity may be further included. As the cellulose-based compound, at least one of carboxymethyl cellulose, hydroxypropylmethyl cellulose, methyl cellulose, or alkali metal salts thereof may be mixed and used. As the alkali metal, Na, K, or Li may be used.

The dry binder is a polymer material capable of being fiberized, and may be or include, for example, polytetrafluoroethylene, polyvinylidene fluoride, a polyvinylidene fluoride-hexafluoropropylene copolymer, a polyethylene oxide, or a combination thereof.

The conductive material is used in order to give conductivity to the electrode, and may be or include any material as long as the electronic conductive material does not trigger a chemical change in the battery configured. Examples may include, for example, a carbon-based material such as natural graphite, artificial graphite, carbon black, acetylene black, Ketjen black, a carbon fiber, a carbon nanofiber, and a carbon nanotube; and may be or include a metal-based material in the form of metal powder or metal fiber including copper, nickel, aluminum, silver, and the like; a conductive polymer such as a polyphenylene derivative; or a mixture thereof.

The lower layer 8 is or includes a functional layer, and may be formed on the substrate 80 in a dry or wet manner. The lower layer 8 may include, for example, a carbon-based conductive material. The carbon-based conductive material included in the lower layer may be one of the carbon-based conductive materials included in the upper layer 9. The lower layer 8 may include a carbon-based conductive material that is similar to or the same as the upper layer 9. Since the lower layer 8 includes the carbon-based conductive material, the lower layer may be, for example, a conductive layer. The lower layer may be, for example, a conductive layer including a binder and a carbon-based conductive material.

The lower layer 8 may be disposed on the substrate 80 in a dry manner, for example, by chemical vapor deposition (CVD), physical vapor deposition (PVD), or the like. The lower layer 8 can be disposed on the substrate 80 in a wet manner, for example by spin coating, dip coating, or the like. The lower layer 8 may be formed on the substrate 80 by, for example, deposition of a carbon-based conductive material. The dry coated middle layer is made of or includes a carbon-based conductive material, and may not include a binder. Alternatively, the lower layer may be disposed on the substrate 80, for example, by coating a composition including a carbon-based conductive material, a binder, and a solvent onto the surface of the substrate 80 and drying. The lower layer may have a single-layer structure, or a multi-layer structure including a plurality of layers.

The binder included in the lower layer 8 may increase the binding force between the substrate 80 and the upper layer 9. The binder included in the lower layer 8 is, for example, a conductive binder or a non-conductive binder.

The conductive binder is, for example, an ion conductive binder and/or an electron conductive binder. The binder having both ion conductivity and electron conductivity may be included in the ion conductive binder and also in the electron conductive binder.

The ion conductive binder may be or include, for example, at least one of polystyrene sulfonate (PSS), polyvinylidene fluoride-hexafluoropropylene (PVDF-HFP), polyvinyl fluoride (PVF), polyvinylidene fluoride (PVDF) ), polymethyl methacrylate (PMMA, poly(methylmethacrylate), polyethylene oxide (PEO, polyethylene oxide), polyethylene glycol (PEG), polyacrylonitrile (PAN), polytetrafluoroelene (PTFE), These include polyethylenedioxythiophene (PEDOT), polypyrrole (PPY), polyacrylonitrile (PAN), polyaniline, polyacetylene, or the like. The ion conductive binder may include a polar functional group. The ion conductive binder including the polar functional group may be, for example, Nafion, Aquivion, Flemion, Gore, Aciplex, Morgane ADP, sulfonated poly(ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or the like.

The electron conductive binder may be or include, for example, polyacetylene, polythiophene, polypyrrole, poly(p-phenylene), poly(phenylenevinylene), poly(phenylenesulfide), polyaniline, or the like. The lower layer 8 may be, for example, a conductive layer including a conductive polymer.

The binder included in the lower layer 8 may be one of the binders included in the upper layer 9. That is, the lower layer 8 may include a binder that is similar to or the same as the upper layer 9. The binder included in the lower layer 8 may be or include, for example, a fluorine-based binder. The fluorine-based binder included in the middle layer is, for example, polyvinylidene fluoride (PVDF).

Meanwhile, the first substrate 80 includes an electrode active portion in which the active material layers 81, 82, 83, and 84 are formed and an electrode uncoated portion in which the first substrate 80 is exposed as shown because the active material layers 81, 82, 83, and 84 are not formed, and the negative electrode tab 136 may be connected to the electrode uncoated portion.

The negative electrode tab 136 may be made of or include nickel.

As described above, in the example embodiment of the present disclosure, the active material layers formed on one surface and the other surface of the substrate 80 have different thicknesses based on the location of the electrode tab 136, thereby increasing electrode plate resistance and improving safety characteristics due to thickness deviation between the core and the end of the coil.

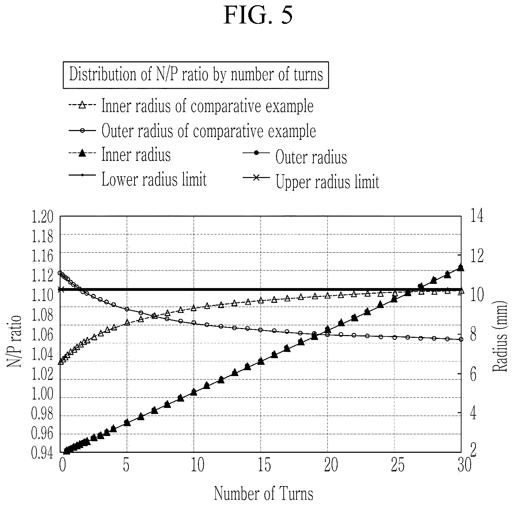

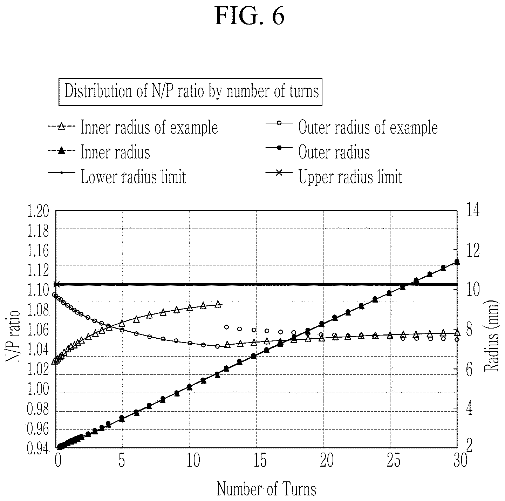

FIG. 5 illustrates a graph of a capacity ratio between the negative electrode and the positive electrode (N/P ratio) to the number of turns of an electrode assembly according to a conventional art, and FIG. 6 illustrates a graph of the N/P ratio to the number of turns of an electrode assembly according to an example embodiment of the present disclosure.

The N/P ratio is a ratio of negative electrode capacity to positive electrode capacity, and in the cylindrical electrode assembly, the smaller the difference in N/P ratio between the inner surface (the inner active material layer) and the outer surface (the outer active material layer), the more stable is the rechargeable battery.

Referring to FIG. 5 which reflects the conventional art, as the number of turns increases, the N/P ratio of the inner surface increases and approaches 1.12, and the N/P ratio of the outer surface decreases and approaches 1.06. In addition, it can be seen that the difference in the N/P ratio between the inner and outer surfaces has increased to about 0.06.

On the other hand, referring to FIG. 6 according to examples of the present disclosure, it can be seen that as the number of turns increases, the N/P ratio of the inner surface increases and then decreases around the tab (the portion where the graph is broken), approaching 1.06, and the N/P ration of the outer surface decreases and then increases around the tab, approaching 1.06, which is similar to the inner surface.

As described above, it can be seen that the electrode assembly according to the conventional art has a large difference in the N/P ratio between the inner surface and the outer surface, while the electrode assembly according to the example embodiment of the present disclosure has little difference in the N/P ratio between the inner surface and the outer surface. This reduction of the capacity difference between the inner and outer surfaces thereby increases the safety of the rechargeable battery.

With reference to FIG. 2, the separator 133 exists between the positive electrode 131 and the negative electrode 132, and polyethylene, polypropylene, polyvinylidene fluoride, or a multilayer film of two or more layers thereof may be used for the separator 133, and a mixed multilayer separator 133 such as, e.g., a polyethylene/polypropylene two-layer separator, a polyethylene/polypropylene/polyethylene three-layer separator, a polypropylene/polyethylene/polypropylene three-layer separator, or the like may be used.

The separator 133 may include a porous substrate, and a coating layer including an organic material, an inorganic material, or a combination thereof, which is disposed on one surface or both surfaces of the porous substrate. The organic material and the inorganic material may be mixed and present in one coating layer, or may be present in a form in which a coating layer including the organic material and a coating layer including the inorganic material are stacked.

Referring back to FIG. 1 and FIG. 2, since the electrode assembly 130 is wound around the center pin 134, the center pin 134 is disposed at the center of the electrode assembly 130, and may be disposed parallel to the direction in which the electrode assembly 130 is inserted into the case 120.

The center pin 134 may be configured to maintain a shape to be only slightly or minimally deformed, or close to a shape before deformation, when an entire surface compression load or a local impact load applied from the outside of the rechargeable battery is applied, and may have a hollow circular pipe shape. In addition, the center pin 134 may serve as a movement passage for gas generated therein. When necessary, the center pin 134 may be omitted.

The center pin 134 may be made of or include a material with a constant rigidity, for example, a metal having conductivity such as steel, a steel alloy, aluminum, an aluminum alloy, or the like, in order to be slightly or minimally deformed against external impact. As the center pin 134 is conductive, the first insulating plate 137 may be disposed between the cap assembly 40 and the upper end of the center pin 134 so that both ends of the center pin 134 remain insulated, and the second insulating plate 138 may be disposed between the bottom portion 121 of the case 120 and the lower end of the center pin 134.

A through hole passing through the inside of the center pin 134, a through hole through which the positive electrode tab 135 passes, and a plurality of through holes through which the electrolyte flows may be formed in the first insulating plate 137. A through hole through which the inside of the center pin 134 and a through hole through which the negative electrode tab 136 passes may be formed in the second insulating plate 138.

The case 120 has one side open so that the electrode assembly 130 may be inserted together with the electrolyte, and may be formed to have substantially a similar shape, or the same shape, as the electrode assembly 130. The case 120 may include a circular bottom portion and a cylindrical side portion extending a given length upward from the bottom portion. During the assembly process of the rechargeable battery 100, the upper portion of the cylindrical case 120 may be opened.

Accordingly, during the assembly process of the rechargeable battery 100, the electrode assembly may be inserted into the cylindrical case, and then the electrolyte may be injected into the cylindrical case. During the manufacturing process of the rechargeable battery 100, one side (upper side) of the case 120 may be open, and the electrode assembly 130 may be accommodated inside the case 120 together with the electrolyte. The case 120 may be made of or include steel, a steel alloy, aluminum, an aluminum alloy, or the like.

The electrolyte allows lithium ions generated by electrochemical reactions to move between the first and second electrodes inside the rechargeable battery 100. The electrolyte solution may be composed of or include an organic solvent such as, e.g., EC, PC, DEC, and EMC, and a Li salt such as, e.g., LiPF₆ and LiBF₄. The electrolyte may be liquid, solid, or gel-like.

A beading portion 123 and a crimping portion 124 may be disposed on the side portion 122 of the case 120.

The beading portion 123 is a portion deformed to be concave toward the inside of the case 120, and the crimping portion 124 is a portion deformed such that the edge of the side portion 122 is bent toward the inside. The movement of the electrode assembly 130 may be reduced or suppressed by the beading portion 123, and the cap assembly 140 may be fixed to the case 120 by the crimping portion 124.

The cap assembly 140 includes a safety vent 10 that reduces the risk of, or prevents, explosion of the rechargeable battery 100, and a cap-up 40 that covers the safety vent 10.

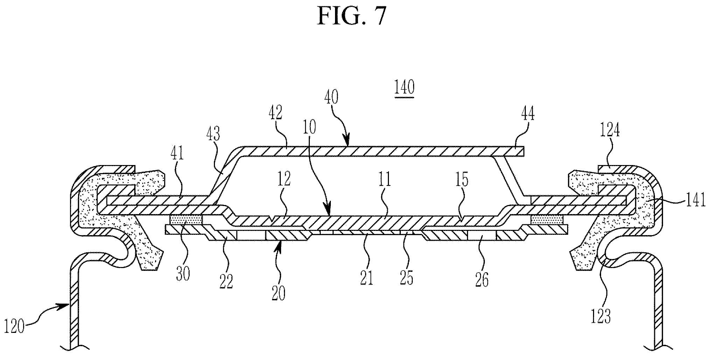

FIG. 7 illustrates an enlarged view of a cap assembly of the rechargeable battery shown in FIG. 2.

Referring to FIG. 2 and FIG. 7, the cap assembly 140 may include a safety vent 10 with a notch groove 15, a cap-down 20 disposed on one side (e.g., lower side) of the safety vent 10 toward the electrode assembly 130, a ring-shaped insulating portion 30 disposed between the safety vent 10 and the cap-down 20, and a cap-up 40 disposed on one side (upper side) of the safety vent 10 opposite to the cap-down 20. The safety vent 10 may be referred to as a current interruptive device (CID).

The safety vent 10 may include a central portion 11 and a peripheral portion 12 surrounding the central portion 11. The thickness of the central portion 11 may be greater than the thickness of the peripheral portion 12, and the notch groove 15 may be disposed in the peripheral portion 12.

The cap-down 20 may include a central portion 21 and a peripheral portion 22 surrounding the central portion 21, and the thickness of the central portion 21 may be smaller than the thickness of the peripheral portion 22. At least one first opening 25 may be disposed in the central portion 21, and at least one second opening 26 may be disposed in the peripheral portion 22.

The central portion 11 of the safety vent 10 and the central portion 21 of the cap-down 20 may be integrally bonded by welding or the like, and the safety vent 10 and the cap-down 20 may be disposed at a distance from each other in the remaining portions except for the central portions 11 and 21. The insulating portion 30 may substantially surround the central portions 11 and 21, and may be disposed between the safety vent 10 and the cap-down 20. The insulating portion 30 may be integrally bonded to the safety vent 10 and the cap-down 20 by a fusion method or the like.

Referring to FIG. 2 to FIG. 5, the positive electrode tab 135 of the electrode assembly 130 may be fixed to one surface (lower surface) of the cap-down 20, and the cap-down 20, the safety vent 10, and the cap-up 40 may be positively charged. The positive electrode tab 135 may be bent to face one surface of the cap-down 20 to increase the contact area with the cap-down 20.

The cap-up 40 may protrude to the outside to function as a positive electrode terminal that contacts an external device to allow a current to flow to the outside, and may have a flat surface.

The negative electrode tab 136 may be connected to the second electrode uncoated portion to protrude in the opposite direction to the positive electrode tab 135, and may be fixed to the lower bottom surface of the case 120 by a fixing method such as, e.g., welding. Accordingly, the case 120 may be negatively charged, and the bottom portion 121 of the case 120 may be configured to operate as a negative terminal.

The cap assembly 140 may be coupled to the side portion 122 of the case 120 via an insulating gasket 141. The insulating gasket 141 may surround the edges of the safety vent 10 and the cap-up 40, and may be pressed between the beading portion 123 and the crimping portion 124 of the case 120.

During the process of using the rechargeable battery 100, gas may be generated in the case 120 due to various causes, and the internal pressure of the rechargeable battery 100 may increase due to the generation of the gas.

When gas is generated, pressure may be continuously applied to the safety vent 10 through the first and second openings 25 and 26 of the cap-down 20, and the safety vent 10 may be deformed toward the outside (or upper side) of the cap assembly 140 at a specific pressure to separate the safety vent 10 from the cap-down 20.

In this case, the central portion 21 of the cap-down 20 may break from the peripheral portion 22 and may rise together with the safety vent 10 while being attached to the central portion 11 of the safety vent 10.

The current flow may thus be blocked by the separation of the safety vent 10 and the cap-down 20. Thereafter, when the pressure continues to increase, the safety vent 10 breaks around the notch groove 15 and the internal gas is discharged. The internal gas is discharged to the outside of the rechargeable battery 100 through, e.g., an exhaust port formed in the cap-up 40.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

**<Description of Symbols>**

| | | | |
|---|---|---|---|
| 100: | rechargeable battery | 120: | case |
| 121: | bottom portion of the case 120 | 122: | side portion of the case 120 |
| 130: | electrode assembly | 131: | positive (first) electrode |
| 132: | negative (second) electrode | 133: | separator |
| 135: | positive electrode tab | 136: | negative electrode tab |
| 140: | cap assembly | 10: | safety vent |
| 20: | cap-down | 11, 21: | central portion |
| 12, 22: | peripheral portion | 30: | insulating portion |
| 40: | cap-up | | |

## Claims

1. An electrode (131,132) for a rechargeable battery (100), the electrode (131,132) comprising:
a substrate (80),
an electrode tab (135,136) on a surface of the substrate (80), and
a first active material layer and a second active material layer on the surface of the substrate (80), the first active material layer and the second active material layer being on opposite sides of the electrode tab (135,136),
wherein thicknesses of the first active material layer and the second active material layer are different from each other.

2. The electrode (131,132) for a rechargeable battery (100) of claim 1, further comprising:
a third active material layer formed on another surface of the substrate (80) and corresponding to the first active material layer, and a fourth active material layer formed on the other surface of the substrate (80) and corresponding to the second active material layer,
wherein thicknesses of the third active material layer and the fourth active material layer are different from each other.

3. The electrode (131,132) for a rechargeable battery (100) of claim 1 or 2, wherein
the thickness of the first active material layer is greater than the thickness of the second active material layer, and
the thickness of the fourth active material layer is greater than the thickness of the third active material layer.

4. The electrode (131,132) for a rechargeable battery (100) of any of the claims 1 to 3, wherein
at least one of the first active material layer and the fourth active material layer includes a lower layer and an upper layer stacked on the lower layer.

5. The electrode (131,132) for a rechargeable battery (100) of any of the claims 1 to 4, wherein
a thickness of the upper layer is greater than a thickness of the lower layer.

6. The electrode (131,132) for a rechargeable battery (100) of any of the claims 1 to 5, wherein
the thickness of the lower layer is in a range of about 1 µm to 10 µm.

7. The electrode (131,132) for a rechargeable battery (100) of any of the claims 1 to 6, wherein
the lower layer comprises a conductive material.

8. The electrode (131,132) for a rechargeable battery (100) of any of the claims 1 to 7, wherein
the conductive material comprises at least one of carbon and CNT.

9. The electrode (131,132) for a rechargeable battery (100) of any of the claims 1 to 8, wherein
a thickness of the lower layer of the first active material layer is lesser than a thickness of the lower layer of the fourth active material layer.

10. The electrode (131,132) for a rechargeable battery (100) of any of the claims 1 to 9, wherein
a ratio of lengths of the first active material layer and the third active material layer to lengths of the second active material layer and the fourth active material layer is in a range of about 1:9 to 5:5.

11. The electrode (131,132) for a rechargeable battery (100) of any of the claims 1 to 10, wherein
the length of the second active material layer is shorter than the length of the fourth active material layer.

12. An electrode assembly (130) comprising:
the electrode (131,132) of any of the claims 1 to 11,
a second electrode overlapping the first electrode, and
a separator (133) between the first electrode and the second electrode,
wherein the first electrode, the second electrode, and the separator (133) are wound to have a jelly roll shape, and the first active material layer and the third active material layer are in a core of the winding.

13. The electrode assembly of claim 12, wherein
the first active material layer is outside the jelly roll relatively to the third active material layer.
